(19) Europäisches Patentamt
European Patent Office
Office européen des brevets

(11) **EP 2 905 133 A1**

(12) **EUROPEAN PATENT APPLICATION**
published in accordance with Art. 153(4) EPC

(43) Date of publication:
**12.08.2015 Bulletin 2015/33**

(51) Int Cl.:
**B32B 27/30** (2006.01)

(21) Application number: **13844448.4**

(22) Date of filing: **03.10.2013**

(86) International application number:
**PCT/JP2013/076891**

(87) International publication number:
**WO 2014/054711 (10.04.2014 Gazette 2014/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.10.2012 JP 2012221581**

(71) Applicant: **Kuraray Co., Ltd.
Okayama 710-0801 (JP)**

(72) Inventors:
• **TSUJIMOTO, Takuya
Tainai-shi
Niigata 959-2691 (JP)**

• **TSUJI, Wataru
Tainai-shi
Niigata 959-2691 (JP)**
• **HIGASHIDA, Noboru
Tokyo 100-8115 (JP)**
• **IGUCHI, Toshiyuki
Tainai-shi
Niigata 959-2691 (JP)**

(74) Representative: **Müller-Boré & Partner
Patentanwälte PartG mbB
Friedenheimer Brücke 21
80639 München (DE)**

(54) **LAMINATE SHEET, MANUFACTURING METHOD THEREFOR, AND SURFACE PROTECTION SHEET**

(57)    A problem to be solved by the invention is providing a laminate sheet which is made of a polyvinyl acetal resin and a methacrylic resin and has excellent transparency, impact resistance, surface hardness, weatherability, moldability, surface smoothness, and the like, and providing a surface protective sheet having excellent adhesion properties with respect to various types of resins and substrates. The problem can be solved by a laminate sheet including at least one polyvinyl acetal resin layer and at least one methacrylic resin layer which is in close contact with the polyvinyl acetal resin layer, the number of carbon atoms of an acetal moiety per 100 carbon atoms which constitute a main chain of the polyvinyl acetal resin being in a range from 30 to 70 and an average degree of polymerization of the polyvinyl acetal resin being in a range from 500 to 2000.

EP 2 905 133 A1

## Description

### Technical Field

The present invention relates to a polyvinyl acetal resin-based laminate sheet, a manufacturing method therefor, and a surface protective sheet using the laminate sheet. More specifically, the present invention relates to a laminate sheet which has excellent transparency, impact resistance, surface hardness, weatherability, moldability, surface smoothness, and the like, and can be advantageously used in applications that require high quality.

### Background Art

Heretofore, a surface protective sheet having a layer made of a thermoplastic resin has been known as a sheet for protecting the surface of a substrate. A polyester resin and a methacrylic resin have been generally used as a thermoplastic resin having excellent transparency, surface hardness, and weatherability. However, when the polyester resin, which has a low surface hardness, is used singly, a hard coating process is required. Additionally, the moldability of the polyester resin is insufficient, and thus it may be difficult to use the polyester resin in the fields that require post-processing such as stretching and bending. The methacrylic resin has excellent transparency, surface hardness, weatherability, and moldability, and thus is advantageously used as surface protective materials for various molded products. However, the methacrylic resin has an insufficient impact resistance, and thus the functions of the methacrylic resin are impaired in some cases.

On the other hand, a polyvinyl acetal resin is produced by acetalization of a polyvinyl alcohol (hereinafter also referred to as "PVA") resin by using an aldehyde. The polyvinyl acetal resin has excellent transparency, impact resistance, weatherability, and moldability, and also has excellent adhesion properties with respect to various substrates. Therefore, the polyvinyl acetal resin is used in a variety of fields including the fields of interlayers, such as a vehicle windshield and safety glass, binders, and adhesive agents. In addition to these features, if it is possible to impart a surface hardness to the polyvinyl acetal resin, the polyvinyl acetal resin can also be advantageously used as a surface protective sheet. For example, Patent Literature 1 discloses a technique for improving the resistance to dispersibility by laminating a polyvinyl acetal layer and a resin plate such as an acrylic plate. Additionally, Patent Literature 2 discloses that a polyvinyl acetal resin is used as an adhesive agent layer when a sheet made of fluorinated polymers having a relatively high hardness is used as a protective sheet.

As a method for achieving both of a high surface hardness and an impact resistance, a method for laminating a methacrylic resin on the surface of a polyvinyl acetal resin sheet can be employed as in the invention disclosed in the above-mentioned Patent Literature 1. However, a typical polyvinyl acetal resin may have insufficient adhesion properties with respect to the methacrylic resin. In addition, the polyvinyl acetal resin has an insufficient impact resistance, and thus it is difficult to use the polyvinyl acetal resin for a surface protective sheet in some cases. Also, because of its insufficient thermal stability, when the polyvinyl acetal resin is used for thermoforming, a cracked gas or a cross-linked gel substance, for example, may be generated due to heat decomposition or heat degradation. In particular, when melt molding is carried out at a high temperature by using other resins in combination, decomposition or degradation is liable to occur and discoloration or deterioration in physical properties of a molded product, for example, are caused, which may make it difficult to perform molding stably for a long period of time, or may make it difficult to obtain a product with a required quality.

### Citation List

### Patent Literature

Patent Literature 1: Japanese Unexamined Patent Application Publication No. 2006-264289
Patent Literature 2: Japanese Unexamined Patent Application Publication No. 2009-137012

### Summary of Invention

### Technical Problem

In view of the above-mentioned background art, an object of the present invention is to obtain a laminate sheet which is made of a polyvinyl acetal resin and a methacrylic resin and has excellent transparency, impact resistance, surface hardness, weatherability, moldability, surface smoothness, and the like. Further, the present invention aims to provide a surface protective sheet having excellent adhesion properties with respect to various resins and substrates.

**Solution to Problem**

As a result of earnest study, the present inventors have found that it is possible to provide a surface protective sheet having excellent transparency, impact resistance, surface hardness, weatherability, moldability, surface smoothness, and adhesion properties by controlling the degree of polymerization and the amount of residual acetic acid groups of a polyvinyl alcohol resin, which is used as a material for a polyvinyl acetal resin , and by controlling the acetal species and the degree of acetalization during production of the polyvinyl acetal resin within a specific range.

Specifically, the present invention provides a laminate sheet including at least one polyvinyl acetal resin layer and at least one methacrylic resin layer which is in close contact with the polyvinyl acetal resin layer. The number of carbon atoms of an acetal moiety per 100 carbon atoms which constitute a main chain of the polyvinyl acetal resin is in a range from 30 to 70, and an average degree of polymerization of the polyvinyl acetal resin is in a range from 500 to 2000.

Further, in the laminate sheet according to the present invention, it is preferable that the degree of acetalization of the polyvinyl acetal resin be in a range from 55 to 85 mol%.

Furthermore, in the laminate sheet according to the present invention, it is preferable that a ratio of a constituting unit including a residual acetic acid group to an entire constituting unit of the polyvinyl acetal resin be in a range of 3 mol% or less.

Moreover, in the laminate sheet according to the present invention, it is preferable that the polyvinyl acetal resin be a resin obtained by acetalization of an aldehyde having a carbon number of 4 or more and an aldehyde having a carbon number of 3 or less, and that a molar ratio of a vinyl alcohol unit acetalized with an aldehyde having a carbon number of 4 or more to a vinyl alcohol unit acetalized with an aldehyde having a carbon number of 3 or less be in a range from 90/10 to 1/99.

The present invention provides a surface protective sheet using the above-mentioned laminate sheet. Further, it is preferable that one polyvinyl acetal resin layer and one methacrylic resin layer be provided.

Furthermore, the present invention provides a method for manufacturing a laminate sheet including a methacrylic resin layer laminated on a surface of a polyvinyl acetal resin layer, the method including: performing coextrusion between a polyvinyl acetal resin and a methacrylic resin, the number of carbon atoms of an acetal moiety per 100 carbon atoms which constitute a main chain of the polyvinyl acetal resin being in a range from 30 to 70 and an average degree of polymerization of the polyvinyl acetal being in a range from 500 to 2000.

**Advantageous Effects of Invention**

According to the present invention, it is possible to obtain a laminate sheet having excellent transparency, impact resistance, surface hardness, weatherability, moldability, surface smoothness, and the like. In particular, it is possible to provide a surface protective sheet which can be advantageously used in applications that require high quality.

**Description of Embodiments**

Embodiments of the present invention will be described below.

While specific materials and values are illustrated below in some cases, the present invention is not limited to such materials and values. Unless otherwise specified, the illustrated materials may be used alone or in combination of two or more kinds thereof.

A laminate sheet according to the present invention includes a methacrylic resin layer and a polyvinyl acetal resin layer which are laminated so as to be in close contact with each other. The number of carbon atoms of an acetal moiety per 100 carbon atoms which constitute a main chain of the polyvinyl acetal resin is in a range from 30 to 70, and an average degree of polymerization of the polyvinyl acetal resin is in a range from 500 to 2000.

The thickness of the polyvinyl acetal resin layer is preferably in a range from 10 $\mu$m to 1000 $\mu$m, more preferably in a range from 20 $\mu$m to 800 $\mu$m, and most preferably in a range from 30 $\mu$m to 600 $\mu$m. The thickness of the methacrylic resin layer is preferably in a range from 5$\mu$ m to 400 $\mu$m, more preferably in a range from 10 $\mu$m to 300 $\mu$m, and most preferably in a range from 15 $\mu$m to 200 $\mu$m.

The layer structure of the laminate sheet according to the present invention is not limited as long as at least one polyvinyl acetal resin layer and at least one methacrylic resin layer are laminated so as to be in close contact with each other. The methacrylic resin layer may be laminated only on one surface of the polyvinyl acetal layer, or may be laminated on both surfaces thereof. Further, a number of polyvinyl acetal resin layers and/or a number of methacrylic resin layers may be laminated. The thickness of the laminate sheet according to the present invention is preferably in a range from 15 $\mu$m to 1.5 mm.

The polyvinyl acetal resin and the methacrylic resin which are used for the laminate sheet will be described below.

The polyvinyl acetal resin used in the present invention is a resin having a vinyl alcohol unit (a constituting unit including a hydroxyl group), a vinyl ester unit (a constituting unit including a residual acetic acid group), and a vinyl acetal unit (a unit obtained by acetalizing two vinyl alcohol units with an aldehyde). Each unit is not particularly limited by the sequence. Each unit may be arranged randomly, blockwise, or in a tapered shape. Repeating units may be linked head-to-tail or head-to-head.

The polyvinyl acetal resin used in the present invention can be synthesized through a reaction between a polyvinyl alcohol resin and an aldehyde by a known method.

The above-mentioned polyvinyl alcohol resin may be a homopolymer composed only of a vinyl alcohol unit, or may be a copolymer composed of a vinyl alcohol and a monomer which is copolymerizable with the vinyl alcohol (the copolymer is hereinafter also referred to as "PVA copolymer"). In another alternative, the polyvinyl alcohol resin may be a modified polyvinyl alcohol resin in which a functional group, such as a carboxyl group, is introduced in the middle of the molecular chain thereof, at the terminal thereof, or at the side chain thereof. These polyvinyl alcohol resins can be used alone or in combination of two or more kinds thereof.

The polyvinyl alcohol resin is not particularly limited by the manufacturing method. For example, the polyvinyl alcohol resin obtained by saponification of vinylester-based polymers such as polyvinyl acetate can be used. Examples of a vinylester monomer for forming the vinyl ester unit include vinyl formate, vinyl acetate, vinyl propionate, vinyl valerate, vinyl caprate, vinyl laurate, vinyl stearate, vinyl benzoate, vinyl pivarate, and vinyl versatate. Among these, vinyl acetate is preferably used because its PVA productivity is excellent.

Examples of a copolymerizable monomer that constitutes the PVA copolymer include $\alpha$-olefins such as ethylene, propylene, 1-butene, isobutene, and 1-hexen; acrylic acid and a salt thereof; acrylate esters such as acrylate methyl, acrylate ethyl, acrylate n-propyl, and acrylate i-propyl; methacrylic acid and a salt thereof; methacrylate esters such as methacrylate methyl, methacrylate ethyl, methacrylate n-propyl, and methacrylate i-propyl; an acrylamide derivative such as acrylamide, N-methylacrylamide, and N-ethylacrylamide; a methacrylamide derivative such as methacrylamide, N-methyl methacrylamide, and N-ethyl methacrylamide; vinyl ethers such as methyl vinyl ether, ethyl vinyl ether, n-propyl vinyl ether, i-propyl vinyl ether, and n-butyl vinyl ether; vinyl ethers having a hydroxy group, such as ethylene glycol vinyl ether, 1,3-propanediol vinyl ether, and 1,4-butanediol vinyl ether; allyl ethers such as allyl acetate, propylallyl ether, butylallyl ether, and hexylallyl ether; a monomer having an oxyalkylene group such as a polyoxyethylene group, a polyoxypropylene group, and a polyoxybutylene group; vinylsilanes such as vinyltrimethoxysilane; $\alpha$-olefins having a hydroxy group or esterified compounds thereof such as isopropenyl acetate, 3-butene-1-ol, 4-penten-1-ol, 5-hexen-1-ol, 7-octen-1-ol, 9-decen-1-ol, and 3-methyl-3-buten-1-ol, ; N-vinyl amides such as N-vinylformamide, N-vinylacetamide, and N-vinylpyrrolidone; a monomer having an carboxyl group derived from fumaric acid, maleic acid, itaconic acid, maleic anhydride, phthalic anhydride, trimellitic anhydride, itaconic anhydride, or the like; a monomer having a sulfonic acid group derived from ethylene sulfonic acid, allyl sulfonic acid, methallyl sulfonic acid, 2-acrylamido-2-methylpropane sulfonic acid, or the like; a monomer having a cation group derived from vinyloxyethyltrimethylammonium chloride, vinyloxybutyltrimethylammonium chloride, vinyloxyethyldimethylamine, vinyloxymethyldiethylamine, N-acrylamidemethyltrimethylammonium chloride, N-acrylamideethyltrimethylammonium chloride, N-acrylamidedimethylamine, allyltrimethylammonium chloride, methallyltrimethylammonium chloride, dimethylallylamine, allylethylamine, or the like.

The content of these copolymerizable monomer units (hereinafter also referred to as "comonomer units") is preferably 20 mol% or less, and more preferably, 10 mol% or less, in the total monomer units of 100 mol% that constitute the PVA copolymer. To exhibit the merits of copolymerization, the comonomer units are preferably 0.01 mol% or more.

As the polymerization process used to produce the vinylester-based polymer, known processes such as a bulk polymerization process, a solution polymerization process, a suspension polymerization process, and an emulsion polymerization process can be employed. Of these processes, a bulk polymerization process, which is a solvent-free polymerization process, and a solution polymerization process, which is a polymerization process in a solvent, are preferably employed. As the alcohol used as a solvent in the solution polymerization process, a lower alcohol such as methylalcohol, ethylalcohol, and propylalcohol is generally used. Examples of a polymerization initiator include azo compounds such as $\alpha,\alpha$'-azobisisobutyronitrile and 2,2'-azobis(2,4-dimethyl-valeronitrile), and peroxides such as benzoyl peroxide and n-propyl peroxydicarbonate. The polymerization temperature is not particularly limited but is generally in a range from 0°C to 200°C.

In the case of saponification of the vinylester-based polymer, an alkaline material is generally used as a catalyst. Examples of the alkaline material include potassium hydroxide and sodium hydroxide. The molar ratio of the alkaline material used as a saponification catalyst is preferably 0.004 to 0.5, and more preferably, 0.005 to 0.05, with respect to the vinyl ester unit in the vinylester-based polymer. The alkaline material used as a saponification catalyst may be added at once in the initial stage of the saponification reaction, or may be gradually added during the saponification reaction.

Examples of the solvent that can be used during the saponification reaction include methanol, methyl acetate, dimethyl sulfoxide, and dimethylformamide. Among these solvents, methanol is preferably used. The moisture content of the solvent to be used is preferably adjusted. The moisture content of the solvent is preferably 0.001 to 1 mass%, more preferably 0.003 to 0.9 mass%, and most preferably 0.005 to 0.8 mass%.

As the polyvinyl alcohol resin, a completely saponified polyvinyl alcohol resin, or a partially saponified polyvinyl alcohol resin may be used.

The saponification degree of the polyvinyl alcohol resin is preferably 97 mol% or more, more preferably 98 mol% or more, and most preferably 99 mol% or more. If the saponification degree is less than 97 mol%, the thermal stability of the obtained polyvinyl acetal resin is insufficient, with the result that it may be difficult to perform stable melt molding due to heat decomposition or cross-linking gelation.

After the saponification reaction, methanol, acetone, methyl acetate, ethyl acetate, hexane, water, or the like can be used as a wash fluid for washing the generated PVA. Among these fluids, methanol, methyl acetate, water, or a mixture thereof is preferably used.

The amount of the wash fluid to be used is preferably set so as to satisfy the content of alkali metal or alkaline-earth metal as described later. In general, it is preferable to use 300 to 10000 parts by mass of the wash fluid, and more preferably 500 to 5000 parts by mass of the wash fluid, with respect to 100 parts by mass of the PVA. The washing temperature is preferably 5 to 80°C, and more preferably 20 to 70°C. The washing time is preferably 20 minutes to 100 hours, and more preferably one hour to 50 hours.

The content of alkali metal or alkaline-earth metal in the PVA used in the present invention is preferably 0.00001 to 1 parts by mass with respect to 100 parts by mass of the PVA. If the content of alkali metal or alkaline-earth metal is less than 0.00001 parts by mass, it is difficult to manufacture the product on an industrial scale. If the content of alkali metal or alkaline-earth metal is more than one part by mass, the content of alkali metal or alkaline-earth metal remaining in the obtained polyvinyl acetal resin is large, with the result that it may be difficult to perform stable melt molding due to decomposition or gelation. Examples of the alkali metal include sodium and potassium. Examples of the alkaline-earth metal include calcium and barium. The content of alkali metal or alkaline-earth metal can be calculated by an atomic absorption process.

A viscosity-average degree of polymerization (hereinafter referred to simply as "degree of polymerization") of the PVA is 500 to 2000, preferably 800 to 1700, and more preferably 1000 to 1500. If the degree of polymerization of the PVA is less than 500, the mechanical properties of the polyvinyl acetal resin molded product are insufficient, which makes it difficult to perform stable molding. On the other hand, if the degree of polymerization of the PVA exceeds 2000, the melt viscosity of the product in the process of thermoforming of the polyvinyl acetal resin is high, which makes it difficult to manufacture the molded product. The degree of polymerization of the PVA is measured in accordance with JIS-K6726.

The types of aldehydes used to produce the polyvinyl acetal resin are not particularly limited.

Examples of aldehydes having a carbon number of 3 or less include formaldehyde (including paraformaldehyde), acetaldehyde (including paracetaldehyde), propionaldehyde, and glyoxal. The aldehydes having a carbon number of 3 or less can be used alone or in combination of two or more kinds thereof. Among these aldehydes having a carbon number of 3 or less, acetaldehyde (including paracetaldehyde) and formaldehyde (including paraformaldehyde) are preferably used as a main body, and most preferably, acetaldehyde, is used in terms of easiness of production.

Examples of aldehydes having a carbon number of 4 or more include butyraldehyde, n-octyl aldehyde, amyl aldehyde, hexyl aldehyde, heptyl aldehyde, 2-ethylhexyl aldehyde, cyclohexyl aldehyde, furfural, glutaric aldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. The aldehydes having a carbon number of 4 or more can be used alone or in combination of two or more kinds thereof. Among these aldehydes having a carbon number of 4 or more, butyraldehyde is most preferably used in terms of easiness of production. In terms of easiness of production, heat resistance, and mechanical properties, butyraldehyde and acetaldehyde are preferably used as a combination of an aldehyde having a carbon number of 4 or more and an aldehyde having a carbon number of 3 or less, which are used to produce the polyvinyl acetal resin.

A reaction between the polyvinyl alcohol resin and the aldehydes, i.e., an acetalization reaction, can be performed by a known process. Examples of the process include a process (hyphydrogamy process) in which the polyvinyl alcohol resin is dissolved in water to cause the polyvinyl alcohol resin to react with the aldehydes in the presence of an acid catalyst, thereby separating out resin particles; and a process (solvent process) in which the polyvinyl alcohol resin is dispersed in an organic solvent to cause the polyvinyl alcohol resin to react with the aldehydes in the presence of an acid catalyst, and the obtained reaction liquid is added to a poor solvent, such as water, to thereby separate out resin particles. Of these processes, the hyphydrogamy process is preferably used.

The aldehydes used for acetalization may be prepared at once, or may be prepared separately per kind. The randomness of the vinyl acetal unit in the polyvinyl acetal resin can be changed by changing the addition order of the aldehydes and the addition order of the acid catalyst.

The acid catalyst used for acetalization reaction is not particularly limited. Examples of the acid catalyst include organic acids such as acetic acid and p-toluene sulfonic acid; inorganic acids such as nitric acid, sulfuric acid, and hydrochloric acid; a gas, such as carbon dioxide, which exhibits acidity when the gas is introduced into an aqueous solution; and a solid acid catalyst such as a cation exchanger and a metallic oxide.

The degree of acetalization of the polyvinyl acetal resin used in the present invention is preferably 55 to 85 mol%, and more preferably 60 to 80 mol%. The polyvinyl acetal resin having an acetalization degree of less than 55 mol% has an insufficient thermal stability and poor melt processability. On the other hand, it is extremely difficult to produce the polyvinyl acetal resin having an acetalization degree of more than 85 mol%, and it takes a long time to carry out an acetalization reaction, which results in an increase in manufacturing cost. The degree of acetalization of the polyvinyl acetal resin can be determined in accordance with the method described in JIS K6728 (1977).

The polyvinyl acetal resin used in the present invention is preferably a resin obtained by acetalization of an aldehyde having a carbon number of 4 or more and an aldehyde having a carbon number of 3 or less. In the polyvinyl acetal resin used in the present invention, the molar ratio between a vinyl alcohol unit acetalized with an aldehyde having a carbon number of 4 or more and a vinyl alcohol unit acetalized with an aldehyde having a carbon number of 3 or less is preferably 90/10 to 1/99, and more preferably 80/20 to 1/99, in view of adhesion properties with respect to a methacrylic resin and heat resistance. The use of such a polyvinyl acetal resin makes it possible to obtain a sheet having excellent adhesion properties with respect to a methacrylic resin and heat resistance, while maintaining the original features of the polyvinyl acetal resin, such as strength, elastic modulus, surface hardness, surface smoothness, and transparency.

In the polyvinyl acetal resin, the ratio of the constituting unit including the residual acetic acid group to the entire constituting unit is preferably 3 mol% or less, more preferably 2 mol% or less, and most preferably 1 mol% or less. If the ratio of the constituting unit including the residual acetic acid group is more than 3 mol%, deterioration in heat resistance and deterioration in continuous productivity, for example, are liable to occur.

Since the degree of polymerization is not changed by the acetalization, the degree of polymerization of the polyvinyl alcohol resin is the same as that of the polyvinyl acetal resin obtained by acetalization of the polyvinyl alcohol resin. Accordingly, it is necessary that the degree of polymerization of the polyvinyl acetal resin (viscosity-average degree of polymerization based on polyvinyl alcohol) be in a range from 500 to 2000. The degree of polymerization of the polyvinyl acetal resin is preferably 800 to 1700, and more preferably 1000 to 1500. If the degree of polymerization of the polyvinyl acetal resin is less than 500, the mechanical properties of the polyvinyl acetal resin are insufficient, which makes it difficult to perform stable molding. If the degree of polymerization exceeds 2000, the melt viscosity during thermoforming becomes high, which may make it difficult to produce a molded product.

Examples of a neutralizer used to remove the acid catalyst include alkali metal compounds such as sodium hydroxide, potassium hydroxide, sodium acetate, sodium carbonate, sodium hydrogen carbonate, and calcium carbonate; alkaline-earth metal compounds such as calcium hydroxide; ammonia; and an ammonia aqueous solution. Examples of alkylene oxides used to remove the acid catalyst include ethylene oxides, propylene oxides, and glycidyl ethers such as ethylene glycol diglycidyl ether.

Next, the polyvinyl acetal resin is purified by removing the catalyst residue, neutralizer residue, salt generated by neutralization, unreacted aldehydes, alkali metal, alkaline-earth metal, by-products, and the like.

The purification method is not particularly limited. For example, the method of repeating deliquoring and washing is generally used. Examples of a liquid used for purification include water and a mixture obtained by adding alcohol, such as methanol or ethanol, to water. Especially, the method of repeating deliquoring and washing until a pH level of preferably 6 to 8, and more preferably 6.5 to 7.5, is reached in a mixed solution of water and alcohol (such as methanol or ethanol) after the neutralization of the polyvinyl acetal resin is preferably employed. This is because the method can effectively reduce alkali metal or alkaline-earth metal and can stably produce the polyvinyl acetal resin. The mixing ratio of water and alcohol is preferably 50/50 to 95/5, and more preferably, 60/40 to 90/10, by mass ratio. If the ratio of water is extremely low, an elution amount of polyvinyl acetal resin in the mixed solution tends to be large. If the ratio of water is extremely high, the removal efficiency of alkali metal or alkaline-earth metal tends to deteriorate.

A large amount of residue remaining in the polyvinyl acetal resin as mentioned above causes polymer degradation, which may make it difficult to perform stable thermoforming. Especially, alkali metal included in the neutralizer is more likely to cause heat decomposition. A large amount of remaining alkali metal causes severe polymer decomposition or cross-linking gelation, which may make it difficult to perform stable melt molding.

Specifically, the content of alkali metal in the polyvinyl acetal resin is preferably 0.1 to 100 ppm, more preferably 0.1 to 50 ppm, and most preferably 0.1 to 10 ppm. If the content of alkali metal is less than 0.1 ppm, it is difficult to manufacture the product on an industrial scale, and it takes a long time to carry out the washing process, which results in an increase in manufacturing cost. The method for removing the residue as described above is not particularly limited. For example, the method of repeating deliquoring and washing with water is generally employed.

The polyvinyl acetal resin which is in a moisture state and from which the residue and the like are removed is dried if needed, and is processed into a powder form, a granular form, or a pellet form, if needed, and is supplied as a molding material. In the case of processing the polyvinyl acetal resin into a powder form, a granular form, or a pellet form, it is preferable to reduce the unreacted aldehydes or moisture by deaeration in a decompressed state.

Various types of additives such as antioxidants, stabilizers, lubricants, processing aids, antistatic agents, colorants, impact-resistant aids, foaming agents, fillers, and delustering agents may be mixed, if needed, in the polyvinyl acetal resin of the present invention. In view of maintaining the surface hardness and mechanical properties of the obtained laminate sheet, it is preferable not to incorporate a large amount of softener or plasticizer.

While it is most preferable that no plasticizer be incorporated in the polyvinyl acetal resin of the present invention, it is inevitable that the polyvinyl acetal resin contain a plasticizer within a range in which the intended function of the present invention is not impaired. When the polyvinyl acetal resin contains a plasticizer, the content of the plasticizer is preferably less than 20 parts by mass, and more preferably less than 10 parts by mass, with respect to 100 parts by mass of the polyvinyl acetal resin. If the content of the plasticizer is equal to or more than 20 parts by mass, the surface hardness of the obtained laminate sheet deteriorates and the plasticizer is bled out, which may lead to adverse effects on the laminate sheet. Examples of the plasticizer incorporated in the polyvinyl acetal resin of the present invention include a carboxylic acid ester-based plasticizer such as a monocarboxylic acid ester-based plasticizer and a polycarboxylic acid ester-based plasticizer; a phosphate-based plasticizer; an organophosphate plasticizer; and a polymetic plasticizer such as a carboxylate polyester-based plasticizer, a polyester carbonate-based plasticizer and a polyalkylene glycol-based plasticizer.

Further, a UV absorber may be added to the polyvinyl acetal resin used in the present invention so as to improve the weatherability. The type of the UV absorber is not particularly limited, but a benzotriazole-based UV absorber, a benzophenone-based UV absorber, or a triazine-based UV absorber is preferably used. The loading amount of the UV absorber is generally 0.1 to 10 mass%, preferably 0.1 to 5 mass%, and more preferably 0.1 to 2 mass%, with respect to the polyvinyl acetal resin.

In view of the enhancement in compatibility with the methacrylic resin, the polyvinyl acetal resin needs to satisfy the requirement that the number of carbon atoms of an acetal moiety per 100 carbon atoms, which constitute a main chain of the polyvinyl acetal resin, is in a range from 30 to 70. Examples of the case where "the number of carbon atoms of an acetal moiety is 30" include a case of performing acetalization with butyraldehyde having a carbon number of 4 to an acetalization degree of 30 mol%, a case of performing acetalization with an acetaldehyde having a carbon number of 2 to an acetalization degree of 60 mol%, and a case of performing acetalization with a molar ratio of acetaldehyde/butyraldehyde of 50/50 to an acetalization degree of 45 mol% so as to obtain an average carbon number of 3. Examples of the case where "the number of carbon atoms of an acetal moiety is 70" include a case of performing acetalization with a butyraldehyde having a carbon number of 4 to an acetalization degree of 70 mol%. In a polyacetal resin, if the number of carbon atoms of an acetal moiety per 100 carbon atoms, which constitute a main chain of the polyacetal resin, is less than 30 or more than 70, the adhesion properties of the polyacetal resin with respect to the methacrylic resin are insufficient, which leads to deterioration in the impact resistance of the laminate sheet.

The methacrylic resin used in the present invention can be obtained by polymerization of a monomer mixture containing alkyl methacrylate.

Examples of the alkyl methacrylate include methyl methacrylate, ethyl methacrylate, propyl methacrylate, isopropyl methacrylate, n-butyl methacrylate, sec-butyl methacrylate, tert-butyl methacrylate, pentyl methacrylate, hexyl methacrylate, octyl methacrylate, 2-ethylhexyl methacrylate, dodecyl methacrylate, myristyl methacrylate, palmityl methacrylate, stearyl methacrylate, behenyl methacrylate, cyclohexyl methacrylate, phenyl methacrylate, and benzyl methacrylate. These alkyl methacrylates may be used alone or in combination of two or more kinds thereof. Among these alkyl methacrylates, alkyl methacrylate having an alkyl group carbon number of 1 to 4 is preferably used, and methyl methacrylate is most preferably used.

In addition to the alkyl methacrylates, alkyl acrylate may be added to the monomer mixture. Examples of the alkyl acrylate include methyl acrylate, ethyl acrylate, propyl acrylate, isopropyl acrylate, n-butyl acrylate, sec-butyl acrylate, tert-butyl acrylate, pentyl acrylate, hexyl acrylate, octyl acrylate, 2-ethylhexyl acrylate, dodecyl acrylate, myristyl acrylate, palmityl acrylate, stearyl acrylate, behenyl acrylate, cyclohexyl acrylate, phenyl acrylate, and benzyl acrylate. Among the alkyl acrylates, alkyl acrylate having an alkyl group carbon number of 1 to 8 is preferably used. These alkyl acrylates may be used alone or in combination of two or more kinds thereof.

The above-mentioned monomer mixture may contain other ethylenic unsaturated monomers which can be copolymerized with alkyl methacrylate and alkyl acrylate.

Examples of the ethylenic unsaturated monomers which can be copolymerized with alkyl methacrylate and alkyl acrylate include diene-based compounds such as 1,3-butadiene and isoprene; vinyl aromatic compounds such as styrene, $\alpha$-methylstyrene, vinyl toluene, 2,4-dimethylstyrene, styrene substituted by halogen, 1-vinylnaphthalene, 4-methylstyrene, 4-propylstyrene, 4-cyclohexylstyrene, 4-dodecylstyrene, 2-ethyl-4-benzylstyrene, and 4-(phenylbutyl)styrene; ethylenic unsaturated nitriles such as acrylonitrile and methacrylonitrile; acrylic acid, methacrylic acid, acrylamide, methacrylamide, maleic anhydride, maleimide, monomethyl maleate, dimethyl maleate. These ethylenic unsaturated monomers may be used alone or in combination of two or more kinds thereof.

The methacrylic resin used in the present invention preferably has an alkyl methacrylate unit ratio of 80 mass% or more, more preferably 90 mass% or more, and most preferably 95 mass%, in view of the weatherability.

The methacrylic resin used in the present invention preferably has a weight-average molecular weight (hereinafter referred to as "Mw") of 40,000 or more, more preferably 40,000 to 10,000,000, and most preferably 80,000 to 1,000,000, in view of the strength property and melting property.

As the methacrylic resin used in the present invention, a resin formed by linking monomers linearly, a resin having a branch, or a resin having an annular structure may be used.

The methacrylic resin used in the present invention is not particularly limited by the manufacturing method, as long as α,β-unsaturated compounds can be polymerized. However, the methacrylic resin produced by radical polymerization is preferably used. Examples of the polymerization process include a bulk polymerization process, a suspension polymerization process, a solution polymerization process, and an emulsion polymerization process.

Examples of a radical polymerization initiator used during polymerization include azo compounds such as azobisisobutyronitrile and azobis-γ-dimethylvaleronitrile; and peroxides such as benzoyl peroxide, cumyl peroxide, oxyneodecanoate, diisopropyl peroxydicarbonate, t-butylcumyl peroxide, cumene hydroperoxide, t-butyl hydroperoxide, cyclohexanone peroxide, methylethyl ketone peroxide, dicumyl peroxide, and lauroyl peroxide. In general, 0.05 to 0.5 parts by mass of the polymerization initiator are used for 100 parts by mass of the entire monomers. The polymerization process is generally carried out for two to 20 hours at a temperature of 50 to 140°C.

To control the molecular weight of the methacrylic resin, a chain transfer agent can be used. Examples of the chain transfer agent include methyl mercaptan, ethyl mercaptan, isopropyl mercaptan, n-butyl mercaptan, t-butyl mercaptan, n-hexyl mercaptan, n-octyl mercaptan, n-dodecyl mercaptan, ethyl thioglycolate, mercapto-ethanol, thio-β-naphthol, and thiophenol. The chain transfer agent is generally used in a range from 0.005 to 0.5 mass% with respect to the entire monomer.

To improve the mechanical strength of the methacrylic resin, a copolymer component may be incorporated therein; the methacrylic resin may be mixed with other resins; or organic or inorganic fine particles may be added thereto, without impairing the operation and effect of the present invention.

To increase the durability of the methacrylic resin layer, various types of additives (for example, a UV absorber) may be added to the methacrylic resin layer. A preferable example of the methacrylic resin layer having high weatherability is a methacrylic resin layer to which a UV absorber is added. Examples of the UV absorber include known UV absorbers such as a benzotriazole-based UV absorber, a benzophenone-based UV absorber, a salicylate-based UV absorber, a cyanoacrylate-based UV absorber, a nickel-based UV absorber, and a triazine-based UV absorber. In addition, other stabilizers, light stabilizers, or antioxidants may also be used.

In the methacrylic resin used in the present invention, various types of additives such as antioxidants, stabilizers, lubricants, processing aids, antistatic agents, colorants, impact-resistant aids, foaming agents, fillers, or delustering agents may be mixed, if needed, in addition to the above-mentioned UV absorbers, within a range in which the intended function of the present invention is not impaired. In view of maintaining the surface hardness and mechanical properties of the obtained laminate sheet, it is preferable not to incorporate a large amount of softener or plasticizer. On the other hand, in order to secure the stability during the formation of a methacryl layer, rubber such as flexible rubber containing butyl acrylate having an adjusted refractive index as a main component may be added to the methacryl layer.

The laminate sheet according to the present invention can be manufactured by a known lamination method such as a coextrusion process, a heat lamination process, or a pressing process, as long as the methacrylic resin layer and the polyvinyl acetal resin layer are laminated so as to be in close contact with each other. In particular, in view of adhesion properties, it is preferable to manufacture the laminate sheet by the coextrusion process. For example, T-die molding with a multilayer die can be used to manufacture the laminate sheet by the coextrusion process. At this time, the molding temperature is appropriately adjusted depending on, for example, the flow characteristics or film forming properties of resins to be used. In view of the adhesion properties between the methacrylic resin layer and the polyvinyl acetal resin layer, the molding temperature is preferably 200°C to 270°C, and more preferably 220°C to 250°C. Various types of additives, such as antioxidants, UV absorbers, and wheathering stabilizers, may be dry-mixed with the resins in advance and supplied to a hopper, or may be supplied after a pellet is prepared by melt-mixing of all materials in advance. In another alternative, the additives may be supplied after a master batch is prepared by concentrating only the additives in the resins.

The laminate sheet according to the present invention can be used as surface protective sheets for various types of molded components. Examples of the surface protective sheets for various types of molded components include signboard components and marking films of, for example, advertising pillars, signboard stands, side signboards, transom signboards, and rooftop signboards; display components of, for example, showcases, partition plates, and shop displays; lighting components such as fluorescent lighting covers, mood lighting covers, lampshades, luminous ceilings, luminous walls, and chandeliers; interior components such as furniture, pendants, and mirrors; building components such as doors, domes, safety window glass, partitions, stairway wainscot panels, balcony wainscot panels, and roofs of buildings for leisure; transport aircraft-related components such as aircraft windshields, visors for pilots, motorcycle windshields, motorboat windshields, screens for buses, side visors for vehicles, rear visors, head wings, headlight covers, vehicle interior components, and vehicle exterior components such as bumpers; electronic equipment components such as name plates for acoustic imaging, stereo covers, television protective masks, vending machines, mobile phones, and personal computers; medical equipment components such as incubators and X-ray machine components; equipment-related components such as machine covers, measuring instrument covers, laboratory devices, rulers, dial plates, and observation windows; optics-related components such as liquid crystal protective plates, light guide plates, light guide films, fresnel lenses, lenticular lenses, front plates for various displays, and diffuser panels; traffic-related components such as road signs, guide plates, convex traffic mirrors at road curves, and sound barriers; green houses, large water tanks, box tanks, bathroom components, clock panels, bath tabs, sanitaries, desk mats, game components, toys, and face protective masks for use during welding; and skin materials used for, for example, personal computers, mobile phones, furniture, vending machines, and bathroom components.

The use of the surface protective sheet of the present invention makes it possible to obtain a molded product which is well balanced in toughness, impact resistance, surface hardness and stiffness, is easy to treat, and has an excellent appearance. When the surface protective sheet of the present invention is formed on a substrate made of, for example, steel, a plastic sheet, cloth, paper, timber, or glass by adhesion, lamination, insert molding, or in-mold molding, the appearance of the substrate can be improved and the substrate can be protected. Further, a coating layer hardened by irradiation of ultraviolet rays (UV) or electron beams (EB) is applied onto the surface protective sheet of the present invention which is combined with the substrate, thereby making it possible to enhance its appearance and productivity. Moreover, because of its excellent appearance, the surface protective sheet can be advantageously used for wallpaper; surfaces of vehicle interior components; surfaces of vehicle exterior components such as bumpers; surfaces of mobile phones; furniture surfaces; surfaces of personal computers; surfaces of vending machines; and surfaces of bathroom components such as bath tabs.

**Examples**

The present invention will be described in more detail below by illustrating examples. However, the present invention is not limited to these examples.

(Production of polyvinyl acetal resins)

Polyvinyl alcohol resins having viscosity-average degrees of polymerization and saponification degrees shown in Table 1 were dissolved in water and the aqueous solution thus obtained was cooled to 12°C. After that, a predetermined amount of butyraldehyde and/or acetaldehyde and 60 mass% of hydrochloric acid were added and stirred to cause acetalization. The resins were separated out with the progress of the reaction. After completion of the reaction, the resins were washed with an excessive amount of water until the pH level reached 6. Then, the resins were added to an alkaline aqueous medium, and were stirred and suspended. Further, the resins were washed with water again until the pH level reached 7. The resulting solution was dried until the volatile content reached 1.0%, thereby obtaining polyvinyl acetal resins (PA1) to (PA14) having the characteristics shown in Table 1.

[Table 1]

| | polyvinyl acetal | | | | | | | | | | | | | |
|---|---|---|---|---|---|---|---|---|---|---|---|---|---|---|
| | PA1 | PA2 | PA3 | PA4 | PA5 | PA6 | PA7 | PA8 | PA9 | PA10 | PA11 | PA12 | PA13 | PA14 |
| acetaldehyde/n- butyraldehyde (mol ratio) | 55/45 | 52/48 | 56/44 | 0/100 | 100/0 | 29/71 | 51/49 | 60/40 | 55/45 | 56/44 | 68/32 | 13/87 | 53/47 | 54/46 |
| degree of acetalization (mol%) | 76 | 50 | 82 | 58 | 78 | 75 | 77 | 74 | 75 | 75 | 40 | 81 | 77 | 75 |
| number of carbon atoms of acetal moiety/number of carbon atoms of main chain (100) | 55 | 37 | 59 | 58 | 39 | 64 | 57 | 52 | 54 | 54 | 26 | 76 | 57 | 55 |
| degree of polymerization (PVA-based) | 1000 | 1000 | 1000 | 1000 | 1000 | 1000 | 1700 | 550 | 1700 | 1000 | 1000 | 1000 | 2400 | 300 |
| residual acetic acid groups (mol%) | 2 | 2 | 2 | 2 | 2 | 2 | 2 | 2 | 0.5 | 5 | 2 | 2 | 2 | 2 |

(Composition of polyvinyl acetal resins)

The composition of the polyvinyl acetal resins was calculated by $^{13}$C-NMR spectral measurement.

(The degree of polymerization of polyvinyl alcohol)

The degree of polymerization (P) of polyvinyl alcohol was measured in accordance with JIS-K6726. Specifically, the PVA was completely re-saponified and purified. After that, the degree of polymerization was obtained by Formula (1) from the limit viscosity $[\eta]$(dl/g) measured in 30°C water.

$$P=([\eta]\times10^3/8.29)^{(1/0.62)} \qquad (1)$$

(Surface hardness)

The surface hardness was evaluated by a pencil hardness test in accordance with JIS-K5600-5-4. The surface hardness was evaluated on the metacylate resin layer side of the laminate sheet according to the present invention.

(Impact resistance)

The impact resistance was evaluated by a Dupont impact test in accordance with JIS-K5600-5-3. The falling height at which no cracking or peeling occurred was measured by a 500 g falling weight. The laminate sheet according to the present invention was evaluated with the methacrylic resin layer side facing upward to be in contact with the falling weight.

<Example 1>

Parapet EH (manufactured by KURARAY CO., LTD.) was used as a methacrylic resin, and the methacrylic resin was prepared by mixing 2.0 parts by mass of UV absorber "Adekastab LA-31" (manufactured by ADEKA CORPORATION) with 100 parts by mass of the methacrylic resin. Next, a laminate sheet having a structure of methacrylic resin layer/polyvinyl acetal resin (PA1) layer was formed by the coextrusion process using the methacrylic resin and the polyvinyl acetal (PA1) obtained by mixing 2.0 parts by mass of Adekastab LA-31 (manufactured by ADEKA CORPORATION) as a UV absorber with the polyvinyl acetal resin. Table 2 shows the structure of the formed laminate sheet and the evaluation results. The coextrusion process was carried out at a temperature condition of 230°C. At this time, the coextrusion moldability was excellent. The surface hardness and impact resistance of the obtained laminate sheet were also excellent.

<Examples 2 to 10>

A laminate sheet having a structure of methacrylic resin layer/polyvinyl acetal resin layer was formed by the coextrusion process using the methacrylic resin used in Example 1 and the polyvinyl acetal resins (PA2 to PA10) shown in Table 1. Table 2 shows the structure the formed laminate sheet and the evaluation results. The coextrusion process was carried out at a temperature condition of 230°C. In each example, the coextrusion moldability of the laminate sheet was excellent. The surface hardness and impact resistance of the obtained laminate sheet were also excellent.

<Example 11>

A laminate sheet having a structure of methacrylic resin layer/polyvinyl acetal resin layer was formed by the coextrusion process using the polyvinyl acetal resin (PA1) and the methacrylic resin prepared by mixing 50 parts by mass of Parapet EH, 50 parts by mass of GR00100 (each of which is manufactured by KURARAY CO., LTD.), and 2.0 parts by mass of UV absorber "Adekastab LA-31" (manufactured by ADEKA CORPORATION). Table 2 shows the structure of the formed laminate sheet and the evaluation results. The coextrusion process was carried out at a temperature condition of 230°C. The coextrusion moldability of the laminate sheet was excellent. The surface hardness and impact resistance of the obtained laminate sheet were also excellent.

<Examples 12 and 13>

A laminate sheet having a structure of methacrylic resin layer/polyvinyl acetal resin layer was formed by the coextrusion process using the methacrylic resin used in Example 1 and the polyvinyl acetal resin prepared by adding 2.0 parts by mass of UV absorber "Adekastab LA-31" and triethylene glycol di-2-ethylhexoate as a platicizer with 100 parts by mass of polyvinyl acetal (PA1) in quantities shown in Table 2. Table 2 shows the structure of the formed laminate sheet and the evaluation results. The coextrusion process was carried out at a temperature condition of 230°C. The coextrusion moldability was excellent. However, a slight reduction in the surface hardness due to the addition of the plasticizer was observed. This tendency was remarkable in Example 13 in which a large amount of plasticizer was added.

[Table 2]

| | | | Example | | | | | | | | | | | | | |
| --- | --- | --- | 1 | 2 | 3 | 4 | 5 | 6 | 7 | 8 | 9 | 10 | 11 | 12 | 13 |
| methacrylic resin layer thickness (mm) | | | 0.2 | 0.2 | 0.2 | 0.2 | 0.2 | 0.2 | 0.2 | 0.2 | 0.2 | 0.2 | 0.8 | 0.2 | 0.2 |
| polyvinyl acetal resin layer | | | PA1 | PA2 | PA3 | PA4 | PA5 | PA6 | PA7 | PA8 | PA9 | PA10 | PA1 | PA1 | PA1 |
| resin | Thickness (mm) | | 0.8 | 0.8 | 0.8 | 0.8 | 0.8 | 0.8 | 0.8 | 0.8 | 0.8 | 0.8 | 0.2 | 0.8 | 0.8 |
| | acetaldehyde/butyraldehyde (mol ratio) | | 55/45 | 52/48 | 56/44 | 0/100 | 100/0 | 29/71 | 51/49 | 60/40 | 55/45 | 56/44 | 55/45 | 55/45 | 55/45 |
| | degree of acetalization (mol%) | | 76 | 50 | 82 | 58 | 78 | 75 | 77 | 74 | 75 | 75 | 76 | 76 | 76 |
| | number of carbon atoms of acetal moiety/number of atoms of main chain (100) | | 55 | 37 | 59 | 58 | 39 | 64 | 57 | 52 | 54 | 54 | 55 | 55 | 55 |
| | degree of polymerization (PVA-based) | | 1000 | 1000 | 1000 | 1000 | 1000 | 1000 | 1700 | 550 | 1700 | 1000 | 1000 | 1000 | 1000 |
| | residual acetic acid groups (mol%) | | 2 | 2 | 2 | 2 | 2 | 2 | 2 | 2 | 0.5 | 5 | 2 | 2 | 2 |
| plasticizer | (parts by mass) | | 0 | 0 | 0 | 0 | 0 | 0 | 0 | 0 | 0 | 0 | 0 | 5 | 15 |
| coextrusion moldability | | | ○ | ○-△ | ○ | ○-△ | ○ | ○ | ○-△ | ○ | ○ | ○-△ | ○ | ○ | ○ |
| surface hardness (pencil hardness) | | | 2H | 2H | 2H | 2H | 2H | 2H | 2H | 2H | 2H | 2H | 2H | 2H | H |
| impact resistance (Dupont impact test) falling height (mm) | | | 500 | 400 | 500 | 500 | 400 | 450 | 500 | 450 | 500 | 450 | 350 | 500 | 550 |

<Comparative Example 1>

An extrusion process was carried out using only the polyvinyl acetal resin (PA1) shown in Table 1. Table 3 shows the structure of the formed laminate sheet and the evaluation results.

The results show that the surface hardness is lower than that of the methacrylic resin laminate sheet.

<Comparative Example 2 to 5>

A laminate sheet having a structure of methacrylic resin layer/polyvinyl acetal resin (PA11 to PA14) layer was formed by the coextrusion process using the methacrylic resin used in Example 1 and the polyvinyl acetal resins (PA11 to PA14) shown in Table 1. Table 3 shows the structure of the formed laminate sheet and the evaluation results.

As for Comparative Examples 2 and 3, the adhesion properties between the polyvinyl acetal resin and the methacrylic resin were low. Accordingly, as a result of a Dupont impact test, peeling occurred at a low drop position, and thus the impact resistance was low.

As for Comparative Example 4, stable extrusion molding could not be carried out due to the high melt viscosity of the polyvinyl acetal resin. Thus, it was difficult to obtain a uniform sheet.

As for Comparative Example 5, cracking occurred frequently due to the fragility of the polyvinyl acetal resin layer. Thus, it was difficult to stably obtain the sheet.

[Table 3]

| | | | Comparative Example | | | | |
|---|---|---|---|---|---|---|---|
| | | | 1 | 2 | 3 | 4 | 5 |
| methacrylic resin layer thickness (mm) | | | - | 0.2 | 0.2 | 0.2 | 0.2 |
| polyvinyl acetal resin layer | | | PA1 | PA11 | PA12 | PA13 | PA14 |
| resin | thickness (mm) | | 1 | 0.8 | 0.8 | 0.8 | 0.8 |
| | acetaldehyde/butyraldehyde (mol ratio) | | 55/45 | 68/32 | 13/87 | 53/47 | 54/46 |
| | degree of acetalization (mol%) | | 76 | 40 | 81 | 77 | 75 |
| | number of carbon atoms of acetal moiety/number of carbon atoms of main chain (100) | | 55 | 26 | 76 | 57 | 55 |
| | degree of polymerization (PVA-based) | | 1000 | 1000 | 1000 | 2400 | 300 |
| | residual acetic acid groups (mol%) | | 2 | 2 | 2 | 2 | 2 |
| plasticizer | (parts by mass) | | 0 | 0 | 0 | 0 | 0 |
| coextrusion moldability | | | ○ | △ | ○ | × | × |
| surface hardness (pencil hardness) | | | F | 2H | 2H | 2H | 2H |
| impact resistance (Dupont impact test) falling height (mm) | | | 600 | 200 | 200 | 500 | 100 |

**Industrial Applicability**

The laminate sheet of the present invention is applicable to, for example, surface protective sheets for various types of molded components.

**Claims**

1. A laminate sheet comprising at least one polyvinyl acetal resin layer and at least one methacrylic resin layer which is in close contact with the polyvinyl acetal resin layer, wherein
   the number of carbon atoms of an acetal moiety per 100 carbon atoms which constitute a main chain of the polyvinyl acetal resin is in a range from 30 to 70, and an average degree of polymerization of the polyvinyl acetal resin is in a range from 500 to 2000.

2. The laminate sheet according to Claim 1, wherein in the polyvinyl acetal resin, a content of at least one type of plasticizer selected from the group consisting of a carboxylic acid ester-based plasticizer, a phosphate-based plasticizer, an organophosphate plasticizer, a carboxylate polyester-based plasticizer, a polyester carbonate-based plasticizer, and a polyalkylene glycol-based plasticizer is less than 10 parts by mass with respect to 100 parts by mass of the polyvinyl acetal resin.

3. The laminate sheet according to Claim 1 or 2, wherein the polyvinyl acetal resin layer has a thickness in a range from 10 $\mu$m to 1000 $\mu$m and the methacrylic resin layer has a thickness in a range from 5 $\mu$m to 400 $\mu$m.

4. The laminate sheet according to any one of Claims 1 to 3, wherein a degree of acetalization of the polyvinyl acetal resin is in a range from 55 to 85 mol%.

5. The laminate sheet according to any one of Claims 1 to 4, wherein a ratio of a constituting unit including a residual acetic acid group to an entire constituting unit of the polyvinyl acetal resin is in a range of 3 mol% or less.

6. The laminate sheet according to any one of Claims 1 to 5, wherein
the polyvinyl acetal resin is a resin obtained by acetalization of an aldehyde having a carbon number of 4 or more and an aldehyde having a carbon number of 3 or less, and
a molar ratio of a vinyl alcohol unit acetalized with an aldehyde having a carbon number of 4 or more to a vinyl alcohol unit acetalized with an aldehyde having a carbon number of 3 or less is in a range from 90/10 to 1/99.

7. A surface protective sheet comprising the laminate sheet according to any one of Claims 1 to 6.

8. The surface protective sheet according to Claim 7, wherein the number of layers of each of the polyvinyl acetal resin layer and the methacrylic resin layer is one.

9. A method for manufacturing a laminate sheet including a methacrylic resin layer laminated on a surface of a polyvinyl acetal resin layer, the method comprising:

performing coextrusion between a polyvinyl acetal resin and a methacrylic resin, the number of carbon atoms of an acetal moiety per 100 carbon atoms which constitute a main chain of the polyvinyl acetal resin being in a range from 30 to 70 and an average degree of polymerization of the polyvinyl acetal being in a range from 500 to 2000.

10. The method for manufacturing a laminate sheet according to Claim 9, wherein the polyvinyl acetal resin layer has a thickness in a range from 10 $\mu$m to 1000 $\mu$m and the methacrylic resin layer has a thickness in a range from 5 $\mu$m to 400 $\mu$m.

11. The method for manufacturing a laminate sheet according to Claim 9 or 10, wherein
the polyvinyl acetal resin is a resin obtained by acetalization of an aldehyde having a carbon number of 4 or more and an aldehyde having a carbon number of 3 or less, and
a molar ratio of a vinyl alcohol unit acetalized with an aldehyde having a carbon number of 4 or more to a vinyl alcohol unit acetalized with an aldehyde having a carbon number of 3 or less is in a range from 90/10 to 1/99.

## INTERNATIONAL SEARCH REPORT

| | International application No. |
|---|---|
| | PCT/JP2013/076891 |

### A. CLASSIFICATION OF SUBJECT MATTER
*B32B27/30*(2006.01)i

According to International Patent Classification (IPC) or to both national classification and IPC

### B. FIELDS SEARCHED

Minimum documentation searched (classification system followed by classification symbols)
B32B1/00-43/00

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho  1971-2013    Toroku Jitsuyo Shinan Koho    1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/016495 A1  (Kuraray Co., Ltd.),<br>10 February 2011 (10.02.2011),<br>claims; paragraphs [0097], [0100], [0101],<br>[0151], [0152]<br>& US 2012/0202070 A1    & EP 2463336 A1<br>& CN 102575080 A         & TW 201120122 A | 1-5,7-10<br>6,11 |
| Y | WO 2006/038332 A1  (Sekisui Chemical Co., Ltd.),<br>13 April 2006 (13.04.2006),<br>claims; paragraphs [0073] to [0079]<br>& JP 2006-264289 A      & JP 2010-201932 A<br>& US 2007/0014976 A1    & EP 1795343 A1<br>& EP 2574456 A1 | 6,11 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>        13 December, 2013 (13.12.13) | Date of mailing of the international search report<br>        24 December, 2013 (24.12.13) |
|---|---|
| Name and mailing address of the ISA/<br>        Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006264289 A
- JP 2009137012 A

**Non-patent literature cited in the description**

- *JIS K6728,* 1977